(19) Europäisches Patentamt
European Patent Office
Office européen des brevets

(11) **EP 1 703 686 B1**

(12) **EUROPEAN PATENT SPECIFICATION**

(45) Date of publication and mention
of the grant of the patent:
**12.12.2007 Bulletin 2007/50**

(51) Int Cl.:
**H04L 25/03** (2006.01)

(21) Application number: **05005877.5**

(22) Date of filing: **17.03.2005**

(54) **Maximum likelihood equalization with interpolation for complexity reduction**

Maximum-Wahrscheinlichkeits-Entzerrung mit Interpolation für Reduktion der Komplexität

Égalisation à maximum de vraisemblance avec interpolation pour la réduction de la complexité

(84) Designated Contracting States:
**DE FR GB**

(43) Date of publication of application:
**20.09.2006 Bulletin 2006/38**

(73) Proprietor: **Sony Deutschland GmbH**
**10785 Berlin (DE)**

(72) Inventors:
• **Stirling-Gallacher, Richard,**
**Sony Deutschland GmbH**
**70327 Stuttgart (DE)**
• **Mandato, Davide,**
**Sony Deutschland GmbH**
**70327 Stuttgart (DE)**

(74) Representative: **Körber, Martin Hans et al**
**Mitscherlich & Partner**
**Patent- und Rechtsanwälte**
**Postfach 33 06 09**
**80066 München (DE)**

(56) References cited:
• **JUNQIANG LI ET AL: "Multi-stage low complexity maximum likelihood detection for OFDM/SDMA wireless LANs" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. 1 OF 10, 11 June 2001 (2001-06-11), pages 1152-1156, XP010553509 ISBN: 0-7803-7097-1**

**Description**

The present invention relates to an equalising structure and method for a receiving device of a wireless communication system, in which transmit information is modulated onto carrier signals of a multi-carrier system according to a modulation scheme, whereby all possible data symbols are represented as constellation points in the signal constellation of the modulation scheme and whereby the equalising structure performs a maximum likelihood detection in order to determine a constellation point with a minimum Euclidean distance to a received signal vector as a most likely received signal vector.

Equalising structures with maximum likelihood detection (MLD) are typically (but not exclusively) used in communication systems in which two or more independent symbols are transmitted in parallel from one or more transmitters within the same time slot and the same frequency band. In such cases, the symbols interfere with each other. Although such interference is generally not desirable in communication systems, it is in some systems used to increase the data rate, the spectral efficiency and/or the system throughput. Examples of such systems are so-called multiple-input, multiple-output (MIMO) systems, code division multiple access (CDMA) systems and orthogonal frequency division multiplexing-code division multiple access (OFDM-CDMA) systems.

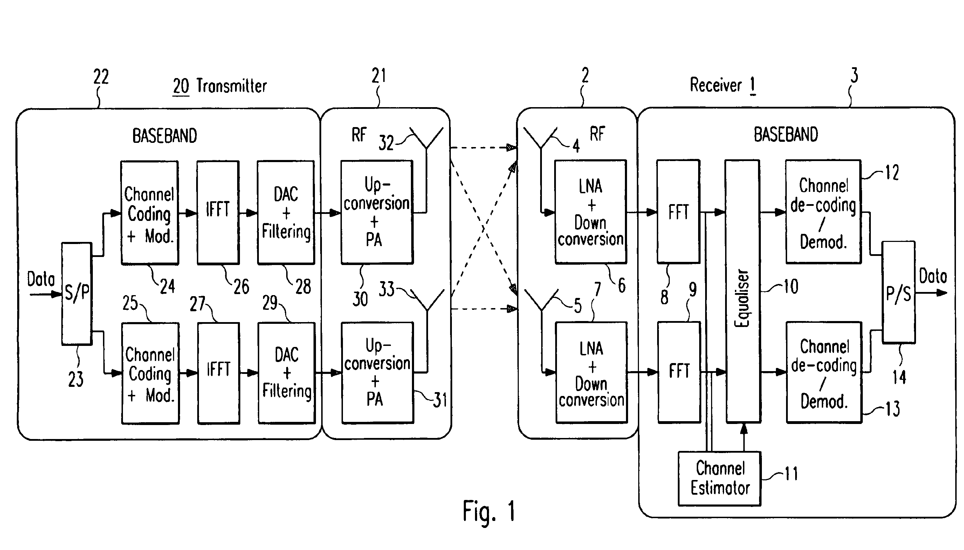

Generally, a MIMO system has $n_T$ transmitting antennas (each transmitting a different data symbol) and $n_R$ receiving antennas. Such a system has a maximum achievable data rate, which is $n_T$ time greater than an equivalent non-MIMO system. For example, in a MIMO system which has two transmitting antennas ($n_T=2$) and two receiver antennas ($n_R=2$), the maximum achievable data rate is two times higher than in a non-MIMO system. Fig. 1 shows the schematic block diagram of such a MIMO system for transmitting two independent symbols in parallel.

The example MIMO system shown in Fig. 1 comprises a receiver 1 and a transmitter 20 for wireless communication on the basis of orthogonal frequency division multiplexing (OFDM). The receiver 1 comprises a radio frequency (RF) part 2 and a base band part 3. The radio frequency part 2 has two antennas 4 and 5, each being connected to a low noise amplifier/downconversion unit 6 and 7, respectively. It is to be noted, that the receiver 1 can e.g. be part of a pure receiving device, or can be part of a receiving and transmitting device. In the later case, the antennas 4 and 5 are receiving as well as transmitting antennas. The downconverted signals from the units 6 and 7 are respectively forwarded and processed by a fast fourier transformation unit (FFT) 8 and 9, respectively. The transformed signals from the fourier transformation units 8 and 9 are forwarded to an equalising structure 10 and a channel estimator 11. The channel estimator 11 performs, based on the receive signal (burst) including training sequences (preamble section), the channel estimation, wherein the channel estimator 10 uses the training sequence to derive the channel estimate. Signals from the channel estimator 11 are supplied to the equalising structure 10. The equalising structure 10 performs a maximum likelihood detection in order to determine a constellation point of the signal constellation of the modulation scheme with a minimum Euclidean distance to a received signal vector as a most likely received signal vector. The specific processing is explained further below. After the equalising processing, the signals are further respectively processed in a demodulator/channel decoder 12 and 13, respectively. The output signals from the demodulator/channel decoders 12 and 13, respectively, are forwarded to a parallel/serial processing unit 14, which outputs the received data bit stream.

The example OFDM transmitter 20 schematically shown in Fig. 1 comprises a radio frequency part 21 and a base band part 22. In the base band part 22, transmit data are split into two parallel data bit streams by a serial/parallel converter 23. The two parallel data bit streams output from the converter 23 are respectively supplied to a channel coder/modulator 24 and 25, respectively. The coded and modulated signals are supplied to an inverse fast fourier transformation (IFFT) unit 26 and 27, respectively, which supply the transform signals to a respective digital/analogue-converter (DAC) and filter unit 28 and 29, respectively. The analogue filtered signals are then forwarded to a respective upconversion/power amplifying unit 30 and 31, respectively, which transmit the amplified signals via a respective transmit antenna 32 and 33, respectively. It is to be noted, that the transmitter 20 can be part of a transmitting and receiving device and the antennas 32 and 33 can be receiving as well as transmitting antennas.

As indicated by the dotted line in Fig. 1, the signals transmitted in parallel interfere with each other. For general MIMO systems the received signal column vector for each symbol is given by x having $n_R$ rows, wherein each row of the vector represents the received signal for each of the receiver antennas. The received signal x is given by,

$$\mathbf{x} = \mathbf{H}\mathbf{s} + \mathbf{n} \qquad\qquad (1)$$

where s is the column vector ($n_T$ x 1) of the sent signal, H is the channel matrix ($n_R$ x $n_T$), representing the channel response from each of the transmitter antennas to the receiving antennas and n is the noise vector ($n_R$ x 1).

For the case of OFDM systems (an example of which is shown in Fig. 1), we shall denote the number of sub-carriers as M. We shall refer to the received baseband signal at sub-carrier $m$ ($m=1, ...,M$) as the received column vector $x_m$ ($n_R$ x 1). Each row element of the vector is the signal from the FFT output corresponding to the $m^{th}$ sub-carrier for each receiver output at the receiver. The receiver vector $x_m$ can therefore be expressed as,

$$\mathbf{x}_m = \mathbf{H}_m \mathbf{s}_m + \mathbf{n}_m \tag{2}$$

where $s_m$ is sent signal vector ($n_T$ x 1), $\mathbf{H}_m$ is the channel matrix ($n_R$ x $n_T$), and $\mathbf{n}_m$ is the noise vector ($n_R$ x 1). Each row element of the sent signal vector $s_m$ corresponds to the input signal of the IFFT corresponding to the $m^{th}$ sub-carrier for each transmitter. The elements of the channel matrix $\mathbf{H}_m$ correspond to the different channel responses from the elements of the transmitted vector to the elements of the received vector. It is therefore the combination of the IFFT, the multi-path channel and the FFT. It accounts for the combined effect of the IFFT, the multi-path channel and the FFT. It is well known, that for OFDM systems that such a combination leads to a channel matrix $H_m$ whose elements $h_{m'ij}$ ($i=1..n_R$, $j=1..n_T$) are single complex values. For the example shown in Fig. 1 with two transmitting antennas 32, 33 and two receiving antennas 4, 5, the received signal for carrier $m$ can be written as,

$$\mathbf{x}_m = \begin{bmatrix} x_{m,1} \\ x_{m,2} \end{bmatrix} = \begin{bmatrix} h_{m,11} & h_{m,12} \\ h_{m,21} & h_{m,22} \end{bmatrix} \begin{bmatrix} s_{m,1} \\ s_{m,2} \end{bmatrix} + \begin{bmatrix} n_{m,1} \\ n_{\cdot m,2} \end{bmatrix} \tag{3}$$

For each sub-carrier m, the normal state-of-the-art maximum likelihood detector searches over the whole set of possible transmit signals $s_m \in A$ (where A is the set of all possible transmit vectors) to decide in favour of the transmit signal vector $\acute{s}_m$ which has the minimum Euclidean distance to the receive vector $x_m$,

$$\hat{\mathbf{s}}_m = \arg\min_{\mathbf{s}_m \in A} \left\| \mathbf{x}_m - \mathbf{H}_m \mathbf{s}_m \right\|^2 \tag{4}$$

The size of the possible transmit signal set A, containing all of the possible sent signal vectors depends upon the number of possible sent symbols from each antenna (which depends upon the modulation constellation size) and the number of transmit antennas $n_T$. The number of possible sent signals vectors is given by,

$$NSV = \text{Number of possible sent signal vectors} = (\text{Modulation Constellation Size})^{n_T} \tag{5}$$

Therefore for higher-level modulation schemes with more than two antennas, the set size can be extremely large and the number of comparison needed to be performed for each sub-carrier in equation (4) is given by

$$\text{Number of comparisons} = NSV - 1 = (\text{Modulation Constellation Size})^{n_T} - 1 \tag{6}$$

To summarise, table 1 shows the number of comparisons that have to be made in equation (4) for each sub-carrier for the commonly used modulation schemes BPSK, QPSK, 16 QAM and 64 QAM.

**Table 1: Number of comparisons for each sub-carrier for the MLD algorithm**

| Modulation Scheme | Antennas ($n_T$,$n_R$) | | |
|---|---|---|---|
| | 2,2 | 3,3 | 4,4 |
| BPSK | 3 | 7 | 15 |
| QPSK | 15 | 63 | 255 |
| 16QAM | 255 | 4095 | 65535 |

(continued)

| Modulation Scheme | Antennas ($n_T$, $n_R$) | | |
|---|---|---|---|
| | 2,2 | 3,3 | 4,4 |
| 64QAM | 4095 | 262143 | $1.7 \times 10^7$ |

Before the comparisons for each sub-carrier in equation (4) can be performed, the vector products $H_m s_m$ have to be formed for each of the possible sent signals $s_m$ ($s_m \in A$),

$$H_m s_m = \begin{bmatrix} h_{m,11} & \cdots & \cdots & h_{m,1n_T} \\ \cdots & \cdots & \cdots & \cdots \\ \cdots & \cdots & \cdots & \cdots \\ h_{m,n_R 1} & \cdots & \cdots & h_{m,n_R n_T} \end{bmatrix} \begin{bmatrix} s_{m,1} \\ \cdots \\ \cdots \\ s_{m,n_T} \end{bmatrix} \qquad (7)$$

Since $H_m$ is a ($n_R \times n_T$) matrix (containing complex values) and $s_m$ is a ($n_T \times 1$) vector containing complex values, the total number of real multiplications and real additions to form $H_m s_m$ for all sent signal vectors is given as follows:

$$\text{Total real multiplications} = 4 \times n_R \times n_T \times (\text{Modulation Constellation Size})^{n_T} \qquad (8)$$

$$\text{Total real additions} = \begin{array}{c} n_R \times ((3 \times n_T) - 1) \times (\text{Modulation Constellation Size})^{n_T} \\ n_R \times ((4 \times n_T) - 2) \times (\text{Modulation Constellation Size})^{n_T} \end{array} \qquad (9)$$

To summarise, there are therefore two high complexity parts of the MLD algorithm (as described by equation (4)), which have to be performed for each received sub-carrier of a multi-carrier system. These are summarised as follows:

Part one:   The large number of multiplications and additions of equation (7) (see equations (8) and (9), which are needed to generate the $H_m s_m$ products).

Part two:   The large number of comparisons, which are required (see equation (6)).

As can be seen from the above, the complexity of the prior art maximum likelihood detection schemes used in equalising structures for receiving devices in wireless communication systems is very high. Therefore, the prior art proposes several ways of reducing the complexity for maximum likelihood detection processing for multiple-input, multiple-output type systems:

Xiaodong, Li, H. C. Huang, A. Lozano, G. J. Foschini, "Reduced Complexity Detection Algorithms for Systems Using Multi-Element Arrays", Global Telecommunications Conference (Globecom 2000), San Francisco, USA, 27-Nov-1Dec, pp. 1072-1076. This paper proposes two types of algorithms. The first algorithm uses Adaptive Group Detection (AGD), which places the possible transmitted signals from the different transmitter antennas into groups. The interference between the groups is then suppressed using interference cancellation or projection techniques. MLD detection is then performed within each group. Since MLD is only performed on a sub-set of the total transmitter antennas, the complexity is reduced. The second algorithm called Multi-step Reduced Constellation Detection performs the processing in a number of steps. The first step uses zero forcing techniques (alternatively MMSE or matched filtering can be used) and provides the second step with a coarse estimate of the sent constellation points from the different transmitter antennas. The second step then uses MLD on neighbours of the coarse estimate obtained from the zero forcing stage. Since MLD is only performed in the second stage using the nearest neighbours of the coarse estimation as candidates complexity is reduced.

G. Awater, A. van Zelst, Richard van Nee, "Reduced Complexity Space Division Multiplexing Receivers", IEEE Vehicular Technology Conference (Spring VTC' 2000), Tokyo, Japan, 15-18 May 2000 Vol. 1. pp. 11-15. This paper describes three different algorithms for reducing the complexity of Maximum Likelihood Detection (MLD). The first algorithm uses a 2-D tree approach to represent the mathematical metrics (from the MLD equation) for the different possible sent sequences. Subsequent lower branches of the tree include the signals from an increasing number of transmit antennas. Maximum Likelihood Sequence Estimation (MLSE) techniques such as Fano's algorithm, stack decoding or retain "k-best" path are then used to decide on the best sent sequence. The second algorithm considers the different metrics in N-dimensional space and uses a survivor algorithm to select the best sent sequence. The third algorithm uses QR decomposition to reduce the N-dimension space and then uses a survivor algorithm.

J Li, K. B. Letaief, et al, "Multi-stage Low Complexity Maximum Likelihood Detection for OFDM/SDMA Wireless LANs", IEEE International Conference on Communications (ICC#2001), Helsinki, Finland, 11-14 Feb 2001, Vol. 4, pp.1152-1156. The algorithm described in this paper is a 2-stage algorithm. The first stage of the algorithm uses a conventional detection method like Minimum Mean Square Error (MMSE) or Interference cancellation (IC). From this stage, "sensitive bits" (where "sensitive bits" as bits which are likely to be in error) are identified and passed to the second stage. The second stage of the algorithm uses Maximum Likelihood Detection (MLD). Since MLD for this algorithm only operates on the sensitive bits (which are sub-set of the total bits) complexity is reduced.

Jacky Ho-Yin Fan et al, "A Sub optimum MLD Detection scheme for Wireless MIMO Systems", IEEE International Symposium on Advances in Wireless Communications (ISWC) 2002, Victoria, Canada. The algorithm discussed in this paper is similar to the algorithm discussed in (3). The algorithm consists of two stages. The first stage performs a conventional detection scheme like, Zero Forcing (ZF) or V-BLAST. If the error probability of the symbols (or vectors of symbols) from the first stage, are above a certain threshold, they are then passed to the section stage in which MLD is performed. Since only a subset of the symbols, are passed to the second stage, the complexity is reduced.

The object of the present invention is to provide an equalising structure and method for a receiving device of a wireless communication system, in which transmit information is modulated onto carrier signals of a multi-carrier system according to a modulation scheme, whereby all possible data symbols are represented as constellation points in the signal constellation of the modulation scheme and whereby the equalising structure performs a maximum likelihood detection in order to determine a constellation point with a minimum Euclidean distance to a received signal detector as a most likely received signal vector, which further reduce the complexity of the maximum likelihood detection.

The above object is achieved by an equalising structure according to claim 1 and an equalising method according to claim 10.

The equalising structure according to the present invention comprises selecting means for selecting, from all sub-carriers, sub-carriers for which the product of channel matrix and symbol vector has to be fully calculated, calculating means for calculating, for the selected sub-carriers, the products of channel matrix and symbol vector, and interpolating means for interpolating, for the remaining sub-carriers, the products of channel matrix and symbol vector based on products calculated by the calculating means.

The equalising method according to the present invention comprises the steps of selecting, from all sub-carriers, sub-carriers for which the product of channel matrix and symbol vector has to be fully calculated, calculating, for the selected sub-carriers, the products of channel matrix and symbol vector, and interpolating, for the remaining sub-carriers, the products of channel matrix and symbol vector based on products calculated in the calculating step.

The present invention further relates to a computer program product directly loadable into the internal memory of a receiving device for receiving information in a wireless communication system, comprising software code portions for performing the method steps of the method according to the present invention when the product is run in the receiving device.

The equalising structure and method of the present invention have the advantage of reducing the complexity of the maximum likelihood detection. Hereby, reducing the complexity means e.g. reducing the number of multiplications and additions needed to perform the $H_m s_m$ products. Thus, there is a new detection scheme, which uses maximum Likelihood Detection (MLD). It can be used for receivers in multi-carrier communication systems, when the received signals are subjected to multi-access interference. Such multi-access interference is experienced by communications systems when the different physical channels (hereafter, the channels) or different users occupy the same frequency and time slot allocations.

Advantageously, for typical indoor channels, which have a relatively low delay spread, the selection procedure can be simplified by selecting merely every $L^{th}$ sub-carrier, where the number of sub-carriers is $M$ and $L$ = 2, 3, 4 ... $M$-1 or $M.$

On the other hand, the selection of sub-carriers for which the product of channel matrix and symbol vector

$H_m s_m$ has to be fully calculated can be based on the determined relationship between the frequency spacing of adjacent sub-carriers and the detected coherence bandwidth of the radio channel between the transmitter and the receiving device, wherein in the selecting step, sub-carriers of the adjacent sub-carriers whose frequency spacing is lower than the coherence bandwidth are omitted.

Further advantageously, in the equalizing structure according to the present invention the interpolating means interpolates a $H_m s_m$ product based on several products (at least 2) fully calculated by the calculating means, wherein the products are weighted differently in the interpolation, depending upon their frequency separation from the sub-carrier for which the $H_m s_m$ product has to be interpolated.

For further reduction of the complexity of the maximum likelihood detection, the equalizing structure according to the present invention comprises dividing means for dividing the constellation points into two or more groups of constellation points, allocating means for allocating a representative signal vector to each of the formed groups, first detecting means for performing a maximum likelihood detection in order to determine one or more of the representative signal vectors having a minimum Euclidean distance to the received signal vector, and second detecting means for performing a maximum likelihood detection in order to determine which one of the constellation points in the group(s) of the one or more determined representative signal vectors has the minimum Euclidean distance to the received signal vector. In this way, the large number of comparisons can be reduced.

The present invention further relates to a receiving device for receiving signals in a wireless communication system, comprising two or more antennas for receiving signals, with an equalising structure according to the present invention for processing the signals received by the antennas. In other words, the equalising structure according to the present invention is advantageously implemented into a receiving device of a MIMO system.

In the following description, the present invention is further explained in relation to the enclosed drawings, in which

Fig. 1 shows a schematic block diagram of a typical MIMO communication system,

Fig. 2 schematically shows the frame structure of signals transmitted in the example MIMO communication system shown in Fig. 1,

Fig. 3 schematically shows a block diagram of an equalising structure according to a first embodiment of the present invention,

Fig. 4 schematically shows a block diagram of an equalising structure according to a second embodiment of the present invention,

Fig. 5 schematically shows a block diagram of an equalising structure according to a third embodiment of the present invention,

Fig. 6 shows an example of a 16QAM constellation scheme,

Fig. 7 shows an example for a constellation division for a 16QAM constellation scheme,

Fig. 8 shows an example for a constellation split for 16QAM modulation scheme with 9 overlapping regions, and

Fig. 9 shows a constellation scheme with one selected constellation point group to be further processed.

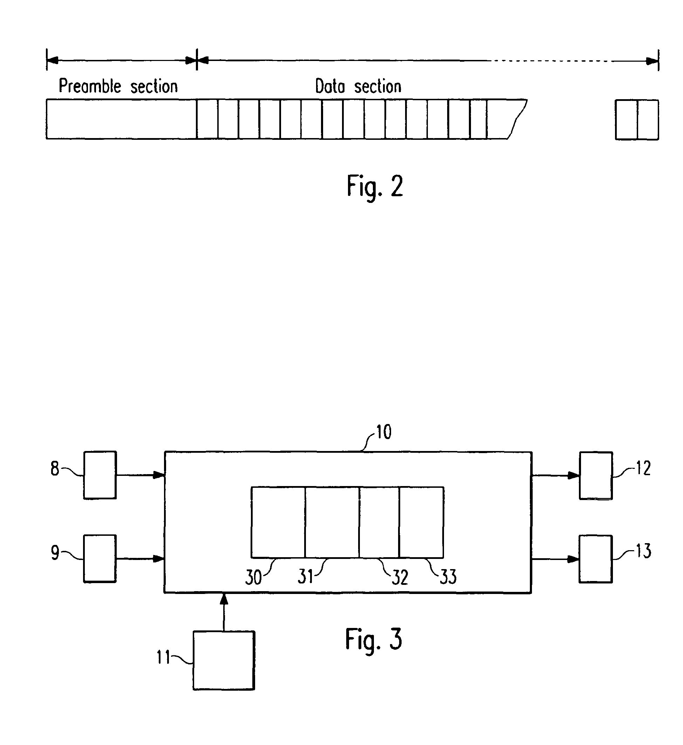

Fig. 2 schematically shows an example of a frame structure for signals transmitted in the example MIMO communication system shown in Fig. 1. Generally, for MLD implementations in communications systems, a preamble for the channel estimation is sent followed by data as shown in Fig. 2. Once the channel matrix $H_m$ is known (via channel estimation during the preamble period), the complete set of vector product $H_m s_m$ can be formed. This means that during the data phase only the comparisons need to be computed. With the present invention the large number of multiplications and additions of equation, which are needed to generate/form the $H_m s_m$ products can be reduced.

For a typical multi-carrier system, frequency components that are close together will suffer variations in signal strength that are strongly correlated. The correlation (or coherence) is used as a measure of this phenomenon. With the method according to the present invention complexity for MLD in a multi-carrier system is reduced, by utilising the correlation of the fading of neighbouring sub-carriers. For a typical multi-carrier system, there is a statistical correlation between the channel responses of adjacent sub-carriers. The exact correlation depends upon the relationship between the frequency spacing of the sub-carriers and the coherence bandwidth $\Delta f_c$ of the radio channel between the transmitter and the receiver. The coherence bandwidth $\Delta f_c$ is a statistical measure of the range of frequencies over which the radio channel passes all spectral components with approximately equal gain and linear phase.

There are various measurers of coherence bandwidth, one measure of coherence bandwidth $\Delta f_c$ is given by J. G. Proakis, "Digital Communications" McGraw Hill International;

$$\Delta f_c \approx \frac{1}{T_m} \tag{10}$$

where $T_m$ is the maximum delay of the multi-path channel between the transmitter and the receiver. An alternative measure, which is a function of the root mean square of the multi-path delay spread, can be found in W.C. Jakes, "Microwave Mobile Communications", IEEE Press 1994. All measures of the coherence bandwidth are inversely proportional to the channel delay spread.

If the frequency spacing of adjacent sub-carriers is lower than the coherence bandwidth $\Delta_{fc}$ of the radio channel, there is a very high correlation between the channel responses of adjacent sub-carriers. Therefore for a given instant in time, the channel response from transmitter antenna j to receiver antenna i on carrier m, denoted as $h_{m,ij}$, is highly correlated with its neighbours $h_{(m+1),ij}$ and $h_{(m-1),ij}$. In such situations, where there is a high correlation between the channel responses of adjacent sub-carriers the complexity for calculating the $\mathbf{H}_m s_m$ products can be reduced.

An equalising structure according to the present invention is schematically shown in Fig. 3. The equalising structure 10 can hereby be comprised in a receiver 1 as shown in Fig. 1. In this case, the equalising structure 10 is adapted to perform a maximum likelihood detection on two parallel incoming signal streams from the fast fourier transformers 8 and 9, respectively. However, it is to be noted that the equalising structure 10 and the corresponding equalising method of the present invention are not restricted to the processing of two parallel received signal streams, but can be used for the processing of any other number of parallel received data streams. Although the equalising structure 10 and method according to the present invention are particularly advantageous for use in MIMO communication systems with a plurality of transmitting and receiving antennas, it is to be noted that the present invention can also advantageously be applied to receiving structures with only a single receiving antenna. Further, the present invention can be applied to receiving devices in any kind of multi-carrier wireless communication system in which there is co-channel interference. Further, the receiving device according to the present invention can be any kind of electronic equipment adapted to receive wireless signals in a wireless communication system, such as a pager, a personal digital assistant, an electronic equipment for wireless telecommunication, such as a portable phone and so forth.

As shown in Fig. 3, the equalising structure 10 comprises a selecting means 30 for selecting, from all sub-carriers, sub-carriers for which the $H_m s_m$ product has to be fully calculated, a calculating means 31 for calculating, for each selected sub-carriers, the $H_m s_m$ products and interpolating means 32 for interpolating, for the remaining sub-carriers, the calculated $H_m s_m$ products. Further, the equalising structure 10 comprises a means 33 for performing the number of comparisons that have to be made in equation (4) for each sub-carrier to decide in favour of the transmit signal vector $\hat{s}_m$ which has the minimum Euclidean distance to the receive vector $x_m$. It is to be noted that the selecting means 30, the calculating means 31, the interpolating means 32 and the detecting means 33 can be implemented in any kind of suitable hardware and/or software structure. For example, the selecting means 30, the calculating means 31, the interpolating means 32 and the detecting means 33 could be implemented as a computer programme product directly loadable into an internal memory of a receiving device 1, whereby the computer programme product comprises software portions for performing the method steps as described further below.

In the following description, the method steps performed in the selecting means 30, the calculating means 31, the interpolating means 32 and the detecting means 33 are explained in more detail.

For typical indoor communication in which the indoor channels have a relatively low delay spread, the coherence bandwidth is very large (typically several Megahertz). Subsequently for a typical OFDM system communication system (with a sub-carrier spacing of several hundred kilohertz), there is a high correlation between the channel responses of adjacent sub-carriers when used in indoor channels. In such situations, according to an embodiment of the present invention, the complexity for calculating the products $H_m s_m$ is reduced by calculating the product $H_m s_m$ only for every $L^{th}$ carrier ($m$=1,$L$+1, 2$L$+1, 3$L$+1, ... $M$). If the chosen value of L is such that M-1 is not a multiple of L, the final samples can be either fully calculated or can take the fully calculated value of the last elements in the series. The $H_m s_m$ products required for the other carriers are calculated using interpolation from the fully calculated values. Various methods can be used here.

The simplest method is that the $L$-1 required $H_m s_m$ products which are located between two fully calculated $H_m s_m$ products are calculated using linear interpolation from the two fully calculated $H_m s_m$ products. More advanced linear interpolation can also be used. One example is to use several pairs of fully calculated $H_m s_m$ for the interpolation, whereby each pair is weighted differently in the interpolation, depending upon its frequency separation from the carrier under consideration. Alternatively, more advanced non-linear interpolation methods (i.e. spline) can also be used. The purpose of this is however, that, the complexity of the chosen interpolation method should be much less than the large number of multiplication and additions (see equations (8) and (9)), which would be required to fully calculate the $H_m s_m$ products for all carriers. A suggested low complexity method on hardware is to set $L=2$ and to uses simple averaging for the interpolation.

$$\mathbf{H}_m \mathbf{s}_m = \frac{\mathbf{H}_{m-1}\mathbf{s}_{m-1} + \mathbf{H}_{m+1}\mathbf{s}_{m+1}}{2} \tag{11}$$

By using two (or any other power of 2), the division operation can easily be implemented on hardware as a bit shift operation to the right. When the $H_{m-1}s_{m-1}$ and the $H_{m+1}s_{m+1}$ products contain complex values, the total number of additions to obtain an interpolated $H_m s_m$ product in this way (see equation (11)) for all sent signal vectors is given by,

$$\text{Total real multiplications} = 0 \tag{12}$$

$$\text{Total real additions} = n_R \times 2 \times (\text{Modulation Constellation Size})^{n_T} \tag{13}$$

When comparing equations (12) and (13) with equations (8) and (9) it can be seen that a considerable reduction in complexity can be achieved for the case of such interpolated carriers. The best choice of the interpolation method and the most suitable factor for L will depend upon the implementation, the sub-carrier frequency spacing, and the coherence bandwidth of the channel.

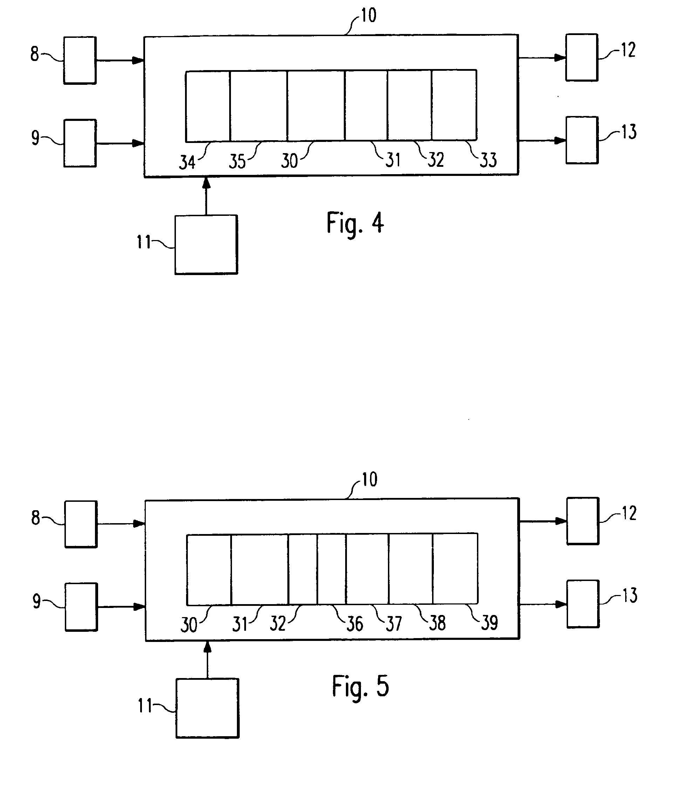

Fig. 4 schematically shows a block diagram of an equalising structure according to a second embodiment of the present invention, in which the interpolation can be performed adaptively. As shown in Fig. 4, the equalising structure 10 comprises a coherence bandwidth detecting means 34 for detecting the coherence bandwidth of the radio channel between the transmitter 22 and the receiver 1, a relationship determining means 35 for determining the relationship between the frequency spacing of adjacent sub-carriers and the coherence bandwidth, the selecting means 30, the calculating means 31, the interpolating means 32 and the detecting means 33.

Generally, pilots inserted in the preamble section shown in Fig. 2 are used to estimate the channel parameters, wherein the pilots are extracted out and fed to the channel estimator 11 which estimates the instant channel response and can be used to estimate the RMS delay spread using the "a priori" knowledge of the pilot symbols. In the equalising structure shown in Fig. 4, the channel response estimation result is used in the coherence bandwidth detecting means 34 for detecting the coherence bandwidth of the radio channel between the transmitter 22 and the receiver 1. Based on the determined relationship between the frequency spacing of adjacent sub-carriers and the coherence bandwidth, the selecting means 30 selects, from all sub-carriers, sub-carriers for which the $H_m s_m$ product has to be fully calculated, wherein sub-carriers of the adjacent sub-carriers whose frequency spacing is lower than the coherence bandwidth are omitted.

Fig. 5 schematically shows a block diagram of an equalising structure according to a third embodiment of the present invention. As shown in Fig. 5, the equalising structure 10 comprises the selecting means 30 for selecting, from all sub-carriers, sub-carriers for which the $H_m s_m$ product has to be fully calculated, the calculating means 31 for calculating, for each selected sub-carriers, the $H_m s_m$ products and the interpolating means 32 for interpolating, for the remaining sub-carriers, the calculated $H_m s_m$ products. Further, the equalising structure 10 comprises a dividing means 36 for dividing the constellation points of the respectively used modulation scheme into two or more groups of constellation points, an allocating means 37 for allocating a representative signal vector to each of the formed groups, a first detecting means 38 for performing a maximum likelihood detection in order to determine one or more of the representative signal vectors having the minimum Euclidean distance to the received signal vector, and a second detecting means 39 for performing a maximum likelihood detection in order to determine which one of the constellation points in the group(s) of the one or more determined representative signal vectors has the minimum Euclidean distance to the received signal vector. It is to be noted that the coherence bandwidth detecting means 34 and the relationship determining means 35 shown in Fig. 4 can be implemented in the channel estimator 11 and/or the selecting means 30 shown in Fig. 5.

In the dividing means 36 the constellation space is split into a number of zones and the maximum likelihood processing is split into a number of steps, ST, e.g. ST = 2. In each successive step the equalising structure 10 or detector "zooms in" on the most likely sent symbols from each antenna and hence the most likely sent symbol vector. Once the most likely sent symbol vector has been found, the selected sent vector can be optionally further processed using state of the art techniques to produce a soft output (containing reliability information). In the following this method is referred to as Sub-Constellation Space Maximum Likelihood Detection (SCS-MLD).

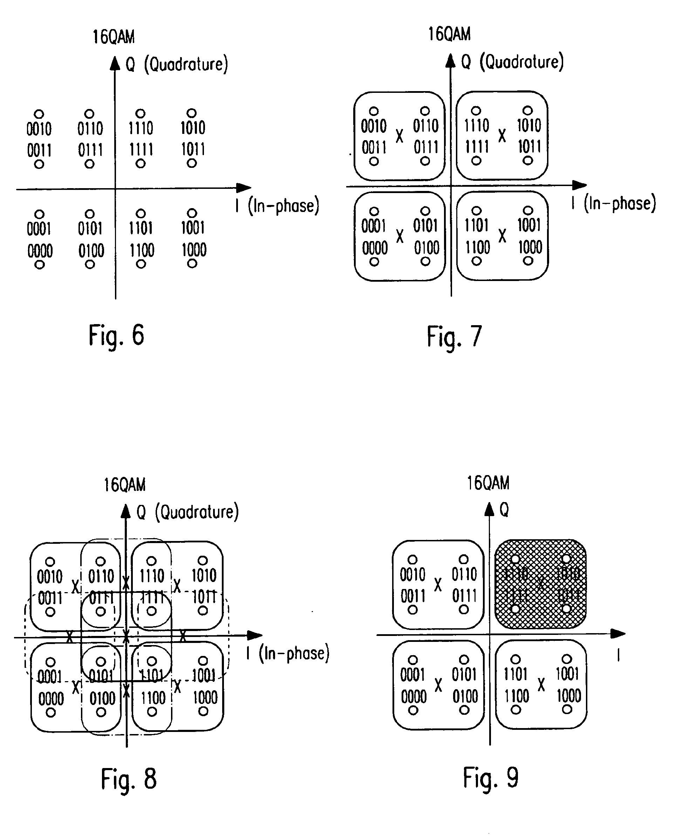

Fig. 6 shows a typical 16 QAM constellation, where there are 4 constellation points in each quadrant. For the first step of SCS-MLD the constellation point are grouped into rectangular zones by the dividing means 30. There are many different ways to do this.

Fig. 7 shows a constellation split in which there are 4 non-overlapping zones and each zone contains 4 constellation points. Alternatively one or more of the zones can overlap each other which results in an increased number of zones. The extreme case of all of zones overlapping, results in 9 zones, and this is shown in Fig 8.

To illustrate the method it is assumed that the constellation is split into four zones as shown in Fig. 7 and that the processing is achieved in 2 steps ($ST$=2). The general principle can however be applied to any high level modulation scheme, any constellation split and may be processed in more than 2 steps. Hereby, additional detecting means could be implemented in addition to the first and second detecting means 38, 39 or the further detecting steps could be performed by the first and/or the second detecting means 38, 39.

The goal of the first step is to determine from which zone the most likely sent constellation point came from. To achieve this, it is assumed that the transmitted signals from the different antennas are the centres of the different zones (These are marked as crosses in Fig. 7).

The first detecting means 38 searches over the set of all possible transmitted zones to decide in, favour of the transmit signal vector which belongs to the zone which has the minimum Euclidean distance to the receive vector.

Once the most likely sent combination of constellation zones from the different antennas has been identified in the first detecting means 38, the second step (in this example last step) concentrates on the points in these zones. This is shown in Fig 9.

The second detecting means 39 then search over all the possible sent vectors to decide in favour of the sent vector which has the minimum Euclidean distance to the receive vector.

Furthermore, by increasing the overlapping between the assigned zones (such as shown in Fig. 8), the possibility of making a zone decision error can be reduced. However, by increasing the number of zones the comparisons for the respective step is also increased. The optimal number of zones for each step and the number of zones, which are passed through to the next step, need to be carefully considered to reduce the complexity for a given performance.

In the equalising structure shown in Fig. 5 the maximum likelihood detection is separated in two (or more steps), whereby each step uses a maximum likelihood detection and whereby the detection gets finer from step to step.

**Claims**

1. Equalizing structure for a receiving device of a wireless communication system, in which transmit information is modulated onto carrier signals of a multi-carrier system according to a modulation scheme, whereby all possible data symbols are represented as constellation points in the signal constellation of the modulation scheme and whereby the equalizing structure (10) performs a maximum likelihood detection in order to determine a constellation point with a minimum Euclidean distance to a received signal vector ($x_m$) as a most likely received signal vector ($\hat{s}_m$) by searching over the whole set of possible transmit signals ($s_m$), **characterized by**:

   selecting means (30) for selecting, from all sub-carriers ($m$), sub-carriers ($m$) for which the product of a channel matrix ($H_m$) and the transmit signal vector ($s_m$) has to be fully calculated,
   calculating means (31) for calculating, for the sub-carriers ($m$) selected by said selecting means (30), the products of the channel matrix ($H_m$) and the transmit signal vector ($s_m$), and
   interpolating means (32) for interpolating, for the remaining sub-carriers ($m$), the products of the channel matrix ($H_m$) and the transmit signal vector ($s_m$) based on the products calculated by said calculating means (31).

2. Equalizing structure for a receiving device of a wireless communication system according to claim 1, wherein said selecting means (30) is adapted to select every $L^{th}$ sub-carrier ($m$) from the number of sub-carriers ($m$), where the number of sub-carriers ($m$) is M and $L = 2, 3, 4, ...$ or $M$-1.

3. Equalizing structure for a receiving device of a wireless communication system according to claim 1, further comprising
   detecting means (34) for detecting the coherence bandwidth of the radio channel between the transmitter (20) and said receiving device (1); and
   determining means (35) for determining the relationship between the frequency spacing of adjacent sub-carriers ($m$) and said coherence bandwidth, wherein,
   said selecting means (30) is adapted to omit sub-carriers ($m$) of said adjacent sub-carriers ($m$) whose frequency spacing is lower than the coherence bandwidth.

**4.** Equalizing structure for a receiving device of a wireless communication system according to anyone of claims 1 to 3, wherein
said interpolating means (32) is adapted to interpolate a product based on several products fully calculated by said calculating means (31), wherein said product is weighted differently in the interpolation, depending upon its frequency separation from the sub-carrier (m) for which said product has to be interpolated.

**5.** Equalizing structure for a receiving device of a wireless communication system according to anyone of claims 1 to 4, further comprising
dividing means (36) for dividing the constellation points into two or more groups of constellation points,
allocating means (37) for allocating a representative signal vector to each of the formed groups,
first detecting means (38) for performing a maximum likelihood detection in order to determine one or more of the representative signal vectors having the minimum Euclidean distance to the received signal vector ($x_m$), and
second detecting means (39) for performing a maximum likelihood detection in order to determine which one of the constellation points in the group(s) of the one or more determined representative signal vectors has the minimum Euclidean distance to the received signal vector ($x_m$)

**6.** Receiving device (1) for receiving multi-carrier signals in a wireless communication system, comprising two or more antennas (4, 5) for receiving signals, with an equalizing structure (10) according to anyone of the claims 1 to 5 for processing the signals received by the antennas (4, 5).

**7.** Equalizing method for equalizing signals transmitted and received in a wireless communication system, in which transmit information is modulated onto carrier signals of a multi-carrier system according to a modulation scheme, whereby all possible data symbols are represented as constellation points in the signal constellation of the modulation scheme, whereby the equalizing method comprises a maximum likelihood processing in order to determine a constellation point with a minimum Euclidean distance to a received signal vector ($x_m$) as a most likely received signal vector ($\hat{s}_m$) by searching over the whole set of possible transmit signals ($s_m$), the equalizing method **characterized by** the steps of:

selecting (30), from all sub-carriers (m), sub-carriers (m) for which the product of a channel matrix ($H_m$) and the transmit signal vector ($s_m$) has to be fully calculated,
calculating (31), for the selected sub-carriers ($m$), the products of the channel matrix ($H_m$) and the transmit signal vector ($s_m$), and
interpolating (32), for the remaining sub-carriers (m), the products of the channel matrix ($H_m$) and the transmit signal vector ($s_m$) based on the products calculated in said calculating step (31).

**8.** Equalizing method according to claim 7, wherein
in said selecting step (30) every $L^{th}$ sub-carrier ($m$) is selected from the number of sub-carriers ($m$), where the number of sub-carriers ($m$) is $M$ and $L=2,3,4,...$ or $M-1$.

**9.** Equalizing method according to claim 7, further comprising the steps of:

detecting (34) the coherence bandwidth of the radio channel between the transmitter (20) and the receiving device (1); and
determining (35) the relationship between the frequency spacing of adjacent sub-carriers (m) and said coherence bandwidth, wherein
in said selecting step (30) sub-carriers ($m$) of said adjacent sub-carriers ($m$) whose frequency spacing is lower than the coherence bandwidth are omitted.

**10.** Equalizing method according to anyone of claims 7 to 9, wherein
in said interpolating step (32) a product is interpolated based on several products fully calculated in said calculating step (31), wherein each product is weighted differently in the interpolation, depending upon its frequency separation from the sub-carrier ($m$) for which said product has to be interpolated.

**11.** Equalizing method according to anyone of claims 7 to 10, further comprising the steps of:

dividing (36) the constellation points into two or more groups of constellation points, allocating (37) a representative signal vector to each of the formed groups,
performing (38) a first maximum likelihood detection in order to determine one or more of the representative signal vectors having the minimum Euclidean distance to the received signal vector ($x_m$), and
performing (39) a further maximum likelihood detection in order to determine which one of the constellation points in the group(s) of the one or more determined representative signal vectors has the minimum Euclidean distance to the received signal vector ($x_m$).

12. Computer program product directly loadable into the internal memory of a receiving device (1) for receiving information in a wireless communication system, comprising software code means adapted to perform the method steps of anyone of the claims 7 to 11 when said computer program product is run in said receiving device.

**Patentansprüche**

1. Entzerrungsaufbau für eine Empfangsvorrichtung eines drahtlosen Kommunikationssystems, bei dem Sendeinformationen gemäß einem Modulationsschema auf Trägersignale eines Mehrträgersystems moduliert werden, wobei alle möglichen Datensymbole als Konstellationspunkte in der Signalkonstellation des Modulationsschemas dargestellt sind und wobei der Entzerrungsaufbau (10) eine Maximalwahrscheinlichkeitserfassung durchführt, um einen Konstellationspunkt mit einem minimalen euklidischen Abstand zu einem empfangenen Signalvektor ($x_m$) durch ein Durchsuchen des gesamten Satzes von möglichen Sendesignalen ($s_m$) als einen am wahrscheinlichsten empfangenen Signalvektor ($\hat{s}_m$) zu bestimmen, **gekennzeichnet durch**
eine Auswahleinrichtung (30) zum Auswählen von Unter-Trägern ($m$), für die das Produkt einer Kanalmatrix ($H_m$) und des Sendesignalvektors ($s_m$) vollständig zu berechnen ist, aus allen Unter-Trägern ($m$),
eine Berechnungseinrichtung (31) zum Berechnen der Produkte der Kanalmatrix ($H_m$) und des Sendesignalvektors ($s_m$) für die Unter-Träger ($m$), die **durch** die Auswahleinrichtung (30) ausgewählt werden, und
eine Interpolationseinrichtung (32) zum Interpolieren der Produkte der Kanalmatrix ($H_m$) und des Sendesignalvektors ($s_m$) basierend auf den Produkten, die durch die Berechnungseinrichtung (31) berechnet werden, für die restlichen Unter-Träger ($m$).

2. Entzerrungsaufbau für eine Empfangsvorrichtung eines drahtlosen Kommunikationssystems nach Anspruch 1, bei der
die Auswahleinrichtung (30) angepasst ist, um jeden L-ten Unter-Träger ($m$) aus der Zahl von Unter-Trägern ($m$) auszuwählen, wobei die Zahl von Unter-Trägern ($m$) $M$ ist und $L$ = 2, 3, 4, ... oder $M$-1.

3. Entzerrungsaufbau für eine Empfangsvorrichtung eines drahtlosen Kommunikationssystems nach Anspruch 1, ferner mit:

einer Erfassungseinrichtung (34) zum Erfassen der Kohärenzbandbreite des Funkkanals zwischen dem Sender (20) und der Empfangsvorrichtung (1); und
einer Bestimmungseinrichtung (35) zum Bestimmen der Beziehung zwischen dem Frequenzabstand von benachbarten Unter-Trägern (m) und der Kohärenzbandbreite, wobei
die Auswahleinrichtung (30) angepasst ist, um Unter-Träger ($m$) der benachbarten Unter-Träger ($m$), deren Frequenzabstand niedriger als die Kohärenzbandbreite ist, wegzulassen.

4. Entzerrungsaufbau für eine Empfangsvorrichtung eines drahtlosen Kommunikationssystems nach einem der Ansprüche 1 bis 3, bei der
die Interpolationseinrichtung (32) angepasst ist, um ein Produkt basierend auf mehreren Produkten, die durch die Berechnungseinrichtung (31) vollständig berechnet werden, zu interpolieren, wobei das Produkt abhängig von der Frequenztrennung desselben von dem Unter-Träger ($m$), für den das Produkt zu interpolieren ist, bei der Interpolation unterschiedlich gewichtet wird.

5. Entzerrungsaufbau für eine Empfangsvorrichtung eines drahtlosen Kommunikationssystems nach einem der Ansprüche 1 bis 4, ferner mit:

einer Teilungseinrichtung (36) zum Teilen der Konstellationspunkte in zwei oder mehr Gruppen von Konstellationspunkten,
einer Zuteilungseinrichtung (37) zum Zuteilen eines darstellenden Signalvektor zu jeder der gebildeten Gruppen,
einer ersten Erfassungseinrichtung (38) zum Durchführen einer Maximalwahrscheinlichkeitserfassung, um einen oder mehrere der darstellenden Signalvektoren mit dem minimalen euklidischen Abstand zu dem empfan-

genen Signalvektor ($x_m$) zu bestimmen, und

einer zweiten Erfassungseinrichtung (39) zum Durchführen einer Maximalwahrscheinlichkeitserfassung, um zu bestimmen, welcher der Konstellationspunkte in der (den) Gruppe(n) des einen oder der mehreren bestimmten darstellenden Signalvektoren den minimalen euklidischen Abstand zu dem empfangenen Signalvektor ($x_m$) hat.

6. Empfangsvorrichtung (1) zum Empfangen von Mehrträgersignalen in einem drahtlosen Kommunikationssystem, die zwei oder mehr Antennen (4, 5) zum Empfangen von Signalen aufweist, mit einem Entzerrungsaufbau (10) nach einem der Ansprüche 1 bis 5 zum Verarbeiten der Signale, die durch die Antennen (4, 5) empfangen werden.

7. Entzerrungsverfahren zum Entzerren von Signalen, die in einem drahtlosen Kommunikationssystem gesendet und empfangen werden, bei dem Sendeinformationen gemäß einem Modulationsschema auf Trägersignale eines Mehrträgersystems moduliert werden, wobei alle möglichen Datensymbole als Konstellationspunkte in der Signalkonstellation des Modulationsschemas dargestellt sind, wobei das Entzerrungsverfahren ein Maximalwahrscheinlichkeitsverarbeiten aufweist, um einen Konstellationspunkt mit einem minimalen euklidischen Abstand zu einem empfangenen Signalvektor ($x_m$) durch ein Durchsuchen des gesamten Satzes von möglichen Sendesignalen ($s_m$) als einen am wahrscheinlichsten empfangenen Signalvektor ($\hat{s}_m$) zu bestimmen, wobei das Entzerrungsverfahren durch folgende Schritte **gekennzeichnet** ist:

Auswählen (30) von Unter-Trägern ($m$), für die das Produkt einer Kanalmatrix ($H_m$) und des Sendesignalvektors ($s_m$) vollständig zu berechnen ist, aus allen Unter-Trägern ($m$),
Berechnen (31) der Produkte der Kanalmatrix ($H_m$) und des Sendesignalvektors ($s_m$) für die ausgewählten Unter-Träger (m), und
Interpolieren (32) der Produkte der Kanalmatrix ($H_m$) und des Sendesignalvektors ($s_m$) basierend auf den Produkten, die bei dem Schritt des Berechnens (31) berechnet werden, für die restlichen Unter-Träger ($m$).

8. Entzerrungsverfahren nach Anspruch 7, bei dem
bei dem Schritt des Auswählens (30) jeder $L$-te Unter-Träger ($m$) aus der Zahl von Unter-Trägern ($m$) ausgewählt wird, wobei die Zahl von Unter-Trägern ($m$) *M ist* und $L$ = 2, 3, 4, ... oder $M$-1.

9. Entzerrungsverfahren nach Anspruch 7, das ferner folgende Schritte aufweist:

Erfassen (34) der Kohärenzbandbreite des Funkkanals zwischen dem Sender (20) und der Empfangsvorrichtung (1); und
Bestimmen (35) der Beziehung zwischen dem Frequenzabstand von benachbarten Unter-Trägern (m) und der Kohärenzbandbreite, wobei
bei dem Schritt des Auswählens (30) Unter-Träger ($m$) der benachbarten Unter-Träger (m), deren Frequenzabstand niedriger als die Kohärenzbandbreite ist, weggelassen werden.

10. Entzerrungsverfahren nach einem der Ansprüche 7 bis 9, bei dem
bei dem Schritt des Interpolierens (32) ein Produkt basierend auf mehreren Produkten, die bei dem Schritt des Berechnens (31) vollständig berechnet werden, interpoliert wird, wobei jedes Produkt abhängig von der Frequenztrennung desselben von dem Unter-Träger ($m$), für den das Produkt zu interpolieren ist, bei der Interpolation unterschiedlich gewichtet wird.

11. Entzerrungsverfahren nach einem der Ansprüche 7 bis 10, das ferner folgende Schritte aufweist:

Teilen (36) der Konstellationspunkte in zwei oder mehr Gruppen von Konstellationspunkten,
Zuteilen (37) eines darstellenden Signalvektors zu jeder der gebildeten Gruppen,
Durchführen (38) einer ersten Maximalwahrscheinlichkeitserfassung, um einen oder mehrere der darstellenden Signalvektoren mit dem minimalen euklidischen Abstand zu dem empfangenen Signalvektor ($x_m$) zu bestimmen, und
Durchführen (39) einer weiteren Maximalwahrscheinlichkeitserfassung, um zu bestimmen, welcher der Konstellationspunkte in der (den) Gruppe(n) des einen oder der mehreren bestimmten darstellenden Signalvektoren den minimalen euklidischen Abstand zu dem empfangenen Signalvektor ($x_m$) hat.

12. Computerprogrammprodukt, das direkt in den inneren Speicher einer Empfangsvorrichtung (1) zum Empfangen von Informationen in einem drahtlosen Kommunikationssystem ladbar ist und das eine Softwarecodeeinrichtung, die angepasst ist, um die Verfahrensschritte eines der Ansprüche 7 bis 11 durchzuführen, wenn das Computerprogrammprodukt in der Empfangsvorrichtung ausgeführt wird, aufweist.

**Revendications**

1. Structure d'égalisation pour un dispositif de réception d'un système de communication sans fil, où des informations d'émission sont modulées sur les signaux de porteuses d'un système multiporteuse conformément à un principe de modulation, grâce à quoi tous les symboles de données possibles sont représentés sous la forme de points de constellation dans la constellation de signal du principe de modulation et grâce à quoi la structure d'égalisation (10) effectue une détection à probabilité maximale pour déterminer un point de constellation ayant une distance euclidienne minimale à un vecteur de signal reçu ($x_m$) en tant que vecteur de signal reçu le plus probable ($\hat{s}_m$) en recherchant sur l'ensemble complet de signaux d'émission possibles ($s_m$), **caractérisée par** :

   un moyen de sélection (30) destiné à sélectionner, parmi toutes les sous-porteuses (m), les sous-porteuses (m) pour lesquelles le produit d'une matrice de canaux ($H_m$) et d'un vecteur de signal d'émission ($s_m$) doit être complètement calculé,
   un moyen de calcul (31) destiné à calculer, pour les sous-porteuses (m) sélectionnées par ledit moyen de sélection (30) les produits de la matrice de canaux ($H_m$) et du vecteur de signal d'émission ($s_m$), et
   un moyen d'interpolation (32) destiné à interpoler, pour les sous-porteuses restantes (m), les produits de la matrice de canaux ($H_m$) et du vecteur de signal d'émission ($s_m$) sur la base des produits calculés par ledit moyen de calcul (31).

2. Structure d'égalisation pour un dispositif de réception d'un système de communication sans fil selon la revendication 1, où
   ledit moyen de sélection (30) est conçu pour sélectionner chaque $L^e$ sous-porteuse (m) à partir du nombre de sous-porteuses (m), où le nombre de sous-porteuses (m) est M et L = 2, 3, 4, ... ou M-1.

3. Structure d'égalisation pour un dispositif de réception d'un système de communication sans fil selon la revendication 1, comprenant en outre
   un moyen de détection (34) destiné à détecter la largeur de bande de cohérence du canal radio entre l'émetteur (20) et ledit dispositif de réception (1), et
   un moyen de détermination (35) destiné à déterminer la relation entre l'espacement en fréquence de sous-porteuses adjacentes (m) et ladite largeur de bande de cohérence, où,
   ledit moyen de sélection (30) est conçu pour omettre des sous-porteuses (m) parmi lesdites sous-porteuses adjacentes (m) dont l'espacement en fréquence est inférieur à la largeur de bande de cohérence.

4. Structure d'égalisation pour un dispositif de réception d'un système de communication sans fil selon l'une quelconque des revendications 1 à 3, où
   ledit moyen d'interpolation (32) est conçu pour interpoler un produit sur la base de plusieurs produits complètement calculés par ledit moyen de calcul (31), dans lequel ledit produit est pondéré différemment dans l'interpolation, selon sa séparation en fréquence par rapport à la sous-porteuse (m) pour laquelle ledit produit doit être interpolé.

5. Structure d'égalisation pour un dispositif de réception d'un système de communication sans fil selon l'une quelconque des revendications 1 à 4, comprenant en outre
   un moyen de répartition (36) destiné à répartir les points de constellation en deux groupes, ou plus, de points de constellation,
   un moyen d'allocation (37) destiné à allouer un vecteur de signal représentatif à chacun des groupes formés,
   un premier moyen de détection (38) destiné à exécuter une détection à probabilité maximale pour déterminer un ou plusieurs vecteurs de signaux représentatifs ayant la distance euclidienne par rapport au vecteur de signal reçu ($x_m$), et
   un second moyen de détection (39) destiné à exécuter une détection à probabilité maximale afin de déterminer quel point parmi les points de constellation dans le ou les groupes du ou de plusieurs vecteurs de signaux représentatifs déterminés présente la distance euclidienne minimale par rapport au vecteur de signal reçu ($x_m$).

6. Dispositif de réception (1) destiné à recevoir des signaux de multiporteuses dans un système de communication sans fil, comprenant deux antennes ou plus (4, 5) destinées à recevoir des signaux, comportant une structure d'égalisation (10) selon l'une quelconque des revendications 1 à 5 pour traiter les signaux reçus par les antennes (4, 5).

**7.** Procédé d'égalisation destiné à égaliser des signaux émis et reçus dans un système de communication sans fil, dans lequel les informations d'émission sont modulées sur des signaux de porteuses d'un système multiporteuse conformément à un principe de modulation, grâce à quoi tous les symboles de données possibles sont représentés sous la forme de points de constellation dans la constellation de signal du principe de modulation, en conséquence de quoi le procédé d'égalisation comprend un traitement à probabilité maximale afin de déterminer un point de constellation ayant une distance euclidienne minimale par rapport à un vecteur de signal reçu ($x_m$) comme étant un vecteur de signal reçu le plus probable ($\hat{s}_m$) en recherchant sur l'ensemble complet de signaux d'émission possibles ($s_m$), le procédé d'égalisation étant **caractérisé par** les étapes consistant à :

sélectionner (30), parmi toutes les sous-porteuses (m), les sous-porteuses (m) pour lesquelles le produit d'une matrice de canaux ($H_m$) et du vecteur de signal d'émission ($s_m$) doit être complètement calculé,
calculer (31), pour les sous-porteuses sélectionnées (m), les produits de la matrice de canaux ($H_m$) et du vecteur de signal d'émission ($s_m$), et
interpoler (32), pour les sous-porteuses restantes (m), les produits de la matrice de canaux ($H_m$) et du vecteur de signal d'émission ($s_m$) sur la base des produits calculés à ladite étape de calcul (31).

**8.** Procédé d'égalisation selon la revendication 7, dans lequel
dans ladite étape de sélection (30) chaque $L^e$ sous-porteuse (m) est sélectionnée à partir du nombre de sous-porteuses (m), où le nombre de sous-porteuses (m) est M et L = 2, 3, 4, ... ou M-1.

**9.** Procédé d'égalisation selon la revendication 7, comprenant en outre les étapes consistant à :

détecter (34) la largeur de bande de cohérence du canal radio entre l'émetteur (20) et le dispositif de réception (1), et
déterminer (35) la relation entre l'espacement en fréquence de sous-porteuses adjacentes (m) et ladite largeur de bande de cohérence, dans lequel
dans ladite étape de sélection (30) les sous-porteuses (m) parmi lesdites sous-porteuses adjacentes (m) dont l'espacement en fréquence est inférieur à la largeur de bande de cohérence sont omises.

**10.** Procédé d'égalisation selon l'une quelconque des revendications 7 à 9, dans lequel
dans ladite étape d'interpolation (32) un produit est interpolé sur la base de plusieurs produits complètement calculés dans ladite étape de calcul (31), où chaque produit est pondéré différemment dans l'interpolation, selon sa séparation en fréquence par rapport à la sous-porteuse (m) pour laquelle ledit produit doit être interpolé.

**11.** Procédé d'égalisation selon l'une quelconque des revendications 7 à 10, comprenant en outre les étapes consistant à :

répartir (36) les points de la constellation en deux groupes ou plus de points de constellation,
allouer (37) un vecteur de signal représentatif à chaque groupe parmi les groupes formés,
exécuter (38) une première détection à probabilité maximale afin de déterminer un ou plusieurs des vecteurs de signaux représentatifs ayant la distance euclidienne minimale par rapport au vecteur de signal reçu ($x_m$), et
exécuter (39) une autre détection à probabilité maximale afin de déterminer quel point parmi les points de constellation dans le ou les groupes parmi les un ou plusieurs vecteurs de signaux représentatifs déterminés présente la distance euclidienne minimale par rapport au vecteur de signal reçu ($x_m$).

**12.** Produit de programme informatique pouvant être directement chargé dans la mémoire interne d'un dispositif de réception (1) destiné à recevoir des informations dans le système de communication sans fil, comprenant un moyen de code logiciel conçu pour exécuter les étapes du procédé selon l'une quelconque des revendications 7 à 11, lorsque ledit produit de programme informatique est exécuté dans ledit dispositif de réception.

Fig. 1

Fig. 2

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIAODONG, LI ; H. C. HUANG ; A. LOZANO ; G. J. FOSCHINI.** Reduced Complexity Detection Algorithms for Systems Using Multi-Element Arrays. *Global Telecommunications Conference,* 27 November 2000, 1072-1076
- **G. AWATER ; A. VAN ZELST ; RICHARD VAN NEE.** Reduced Complexity Space Division Multiplexing Receivers. *IEEE Vehicular Technology Conference (Spring VTC' 2000,* 15 May 2000, vol. 1, 11-15

- **J LI ; K. B. LETAIEF et al.** Multi-stage Low Complexity Maximum Likelihood Detection for OFDM/SDMA Wireless LANs. *IEEE International Conference on Communications (ICC#2001,* 11 February 2001, vol. 4, 1152-1156
- **JACKY HO-YIN FAN et al.** A Sub optimum MLD Detection scheme for Wireless MIMO Systems. *IEEE International Symposium on Advances in Wireless Communications (ISWC,* 2002
- **J. G. PROAKIS.** Digital Communications. McGraw Hill
- **W.C. JAKES.** Microwave Mobile Communications. IEEE Press, 1994